# FASCICULE DE BREVET EUROPEEN

(11) **EP 2 918 438 B1**
(45) Date de publication et mention de la délivrance du brevet: **28.09.2016**
(21) Numéro de dépôt: 15158744.1
(22) Date de dépôt: 12.03.2015
(51) Int. Cl.: B60K 15/04

(54) **Dispositif de détrompage pour conduit d'arrivée de carburant d'un réservoir d'un véhicule**
Fehlbetankungsschutzvorrichtung für Kraftstoffeinfüllleitung eines Fahrzeugtanks
Misfuel inhibiting device for a fuel inlet pipe of a vehicle tank

(30) Priorité: 14.03.2014 FR 1452150
(43) Date de publication de la demande: 16.09.2015
(73) Titulaire: Microtechnic, 98000 Monaco (MC)
(72) Inventeur: Gonin, Vincent, 06000 Nice (FR); Campello, Thomas, 06140 VENCE (FR); Fontaine, Arthur, 06230 Villefranche-sur-Mer (FR)
(74) Mandataire: Delorme, Nicolas

(56) Documents cités:
- EP-A1- 2 093 090
- US-A1- 2013 001 226

## Description

La présente invention concerne un dispositif de détrompage pour un conduit de remplissage en carburant d'un réservoir d'un véhicule.

Pour satisfaire aux normes internationales en vigueur dans l'industrie automobile, il est prévu d'empêcher l'introduction d'un pistolet de distribution en carburant diesel dans un conduit de remplissage d'un réservoir d'un véhicule équipé d'un moteur fonctionnant à l'essence.

Le diamètre du conduit de remplissage est en effet dimensionné pour permettre l'introduction d'un pistolet de distribution d'essence, dont le diamètre est sensiblement égal à 21 mm, et pour empêcher l'introduction d'un pistolet de distribution de diesel, dont le diamètre est sensiblement égal à 25 mm.

Cela empêche donc un utilisateur d'introduire par inadvertance du diesel dans le réservoir d'un véhicule équipé d'un moteur fonctionnant à l'essence.

Cependant, ce système de détrompage classique n'empêche pas l'opération inverse, c'est-à-dire l'introduction d'essence dans le réservoir d'un véhicule équipé d'un moteur fonctionnant au diesel, car le conduit de remplissage d'un réservoir relié à un moteur diesel présente un diamètre supérieur à celui d'un pistolet de distribution d'essence.

Cela présente des inconvénients. L'introduction d'essence dans un un moteur diesel peut provoquer une rupture de ce moteur diesel. Les pressions dues à la combustion de l'essence, augmentant pendant le cycle de combustion, peuvent déformer les bielles et le vilebrequin. Dans le cas où le moteur diesel est équipé d'un pot d'échappement catalytique dans lequel se réalise une post-combustion de l'essence non consommée pour brûler les particules résiduelles, les températures augmentent fortement, ce qui induit un risque d'explosion ou d'incendie. Enfin, l'essence peut gripper et endommager sérieusement la pompe d'injection.

Afin de prévenir ces risques, des dispositifs de détrompage ont été conçus pour empêcher l'introduction d'un pistolet de distribution d'essence dans un conduit de remplissage d'un réservoir destiné à alimenter un moteur diesel.

Certains de ces dispositifs de détrompage reposent sur un principe de rotation de cames ou de leviers. Il est ainsi connu du document de brevet US6968874 d'utiliser des leviers comprenant à leur extrémité un crochet pour retenir un volet d'obturation d'un conduit de remplissage d'un réservoir de carburant. L'introduction d'un pistolet de distribution de diesel provoque un déplacement des leviers de sorte que les crochets à l'extrémité des leviers libèrent le volet d'obturation. En revanche, un pistolet de distribution d'essence présente un diamètre trop étroit pour déplacer les leviers, si bien que le volet d'obturation reste bloqué et empêche ainsi l'introduction du pistolet de distribution d'essence dans le conduit.

D'autres dispositifs de détrompage reposent sur un principe de languettes flexibles. A titre d'exemple, le document de brevet EP1690727 montre un dispositif de détrompage dans lequel des languettes flexibles terminées par un crochet bloquent un volet d'obturation d'un conduit d'arrivée de carburant. Ces languettes sont destinées à être déformées du fait de l'introduction d'un pistolet de distribution de diesel, de sorte que cette déformation libère le volet d'obturation et permet l'introduction du pistolet de distribution diesel dans le conduit. En revanche, en l'absence de déformation, comme c'est le cas lors de l'introduction d'un pistolet de distribution d'essence, le volet reste bloqué en position d'obturation du conduit et empêche ainsi l'introduction d'un pistolet de distribution d'essence.

D'autres dispositifs de détrompage, connus par exemple du document de brevet FR2916389, reposent sur un principe de pièces de blocage mobiles en translation radiale. Ces pièces de blocage servent à bloquer un volet d'obturation d'un conduit d'arrivée de carburant en position d'obturation. Lorsqu'un pistolet de distribution de diesel est introduit, ce pistolet déplace radialement les pièces de blocage, contre l'action d'un ressort, ce qui libère le volet d'obturation et permet au pistolet de distribution de diesel de pénétrer dans le conduit. En revanche, le diamètre d'un pistolet de distribution d'essence est trop étroit pour translater radialement les pièces de blocage, si bien que le volet d'obturation reste bloqué et empêche l'introduction d'un pistolet de distribution d'essence dans le conduit.

Un inconvénient des ces dispositifs de détrompage est leur architecture complexe, comprenant plus d'une dizaine de pièces destinées pour la plupart à être en mouvement les unes par rapport aux autres, si bien que ces dispositifs de détrompage traditionnels présentent masse élevée, un coût élevé, et un risque accru de pannes ou de dysfonctionnements.

Pour y remédier, il est connu du document de brevet FR2940198 d'utiliser un dispositif de détrompage avec un nombre réduit de composants. Ce dispositif de détrompage repose sur un principe d'expansion radiale d'une bague déformable. Cette bague comprend une portion convergente et deux crochets séparés par une fente axiale. Les deux crochets bloquent un volet d'obturation en position d'obturation. L'introduction d'un pistolet de distribution de diesel à travers la portion convergente provoque une expansion radiale de la bague, donc un écartement des crochets, ce qui libère le volet d'obturation. En revanche, un pistolet de distribution d'essence a un diamètre trop étroit pour provoquer une expansion radiale de la bague. Les crochets ne s'écartent donc pas, le volet d'obturation reste bloqué et empêche le pistolet de distribution d'essence d'accéder à l'intérieur du conduit.

Un inconvénient de cette solution est une déformation relativement importante de la bague à chaque cycle d'utilisation, ce qui induit une sensibilité relativement importante à la fatigue oligo-cyclique et au fluage. De plus, la bague est montée flottante dans un boîtier. Cela peut être source de bruit, généré par les vibrations de la bague dans son logement, au détriment de l'agrément d'usage et d'ergonomie et de la qualité perçue. Le fait que les crochets soient directement rattachés à la bague déformable implique une fermeture rapide des crochets au moment du retrait du pistolet de distribution de diesel, parfois avant que le volet d'obturation ait retrouvé sa position d'obturation. Le cas échéant, le détrompage devient ineffectif.

On notera enfin que, de façon générale, il existe un risque qu'un utilisateur parvienne à débloquer le volet d'obturation en forçant sur ce volet d'obturation avec l'extrémité d'un pistolet de distribution essence, car les crochets ou ergots destinés à bloquer le volet d'obturation sont souvent en porte-à-faux.

Un dispositif de détrompage selon le préambule de la revendication 1 est connu du document EP 2 093 090 A1.

Aussi, la présente invention vise à pallier tout ou partie de ces inconvénients en proposant un dispositif de détrompage pour conduit de remplissage en carburant d'un réservoir d'un véhicule automobile, ce dispositif de détrompage présentant une architecture simple, légère, économique, tout en offrant une résistance améliorée à un nombre important de cycles d'utilisation, une robustesse améliorée, ainsi qu'une plus grande qualité perçue.

A cet effet, la présente invention a pour objet un dispositif de détrompage selon la revendication 1.

Ainsi, le dispositif de détrompage selon l'invention offre, avec un nombre limité de composants, une longévité améliorée, du fait de la transformation d'un mouvement d'expansion radiale en un mouvement de déplacement angulaire générant un déblocage du volet d'obturation. Ce mouvement de rotation induit effectivement une progressivité dans la déformation. Cela permet au dispositif de détrompage selon l'invention de mieux résister à un grand nombre de cycles d'utilisation.

Selon un mode de réalisation préféré, le dispositif de détrompage comprend une spirale élastiquement déformable et les moyens de transformation comprennent au moins une spire de la spirale.

Un avantage de cette caractéristique est une déformation progressive, non brusque, augmentant la fiabilité des opérations de blocage et déblocage du volet d'obturation, ainsi que l'ergonomie du dispositif de détrompage.

Selon un mode de réalisation préféré, lequel la spirale comprend une pluralité de spires.

Un avantage de cette caractéristique est une répartition de la déformation radiale sur une pluralité de spires. Cela assure une déformation minimale de chaque spire, ce qui garantit une déformation de chaque spire dans son domaine élastique tout en restant aussi éloigné que possible de son domaine plastique.

Cela évite toute déformation permanente de la géométrie de la spirale, réduit le risque de fatigue oligocyclique en limitant les contraintes dans le matériau, par exemple un polymère, de la spirale.

En effet, la répétition de contraintes alternées au sein des solides déformables, et notamment des polymères, peut conduire à leur déformation ou à leur destruction même lorsque ces contraintes sont sensiblement inférieures au seuil de contrainte susceptible de provoquer une déformation plastique. La répartition de la déformation sur une pluralité de spires permet ainsi de réduire la contrainte dans le matériau sous une valeur très inférieure à ce seuil, par exemple trois ou quatre fois inférieure au seuil conduisant à une déformation plastique.

Selon un mode de réalisation préféré, l'élément élastiquement déformable est une spire de la spirale.

Un avantage de cette caractéristique est architecture simple, donc légère, fiable et peu coûteuse.

Selon un mode de réalisation préféré, la spirale comprend une portion d'extrémité proximale solidaire du boîtier.

Ainsi, la spirale n'est pas montée flottante dans le boîtier. Cela offre un avantage en termes de robustesse, de bruit, ainsi qu'en termes de qualité perçue.

Selon un mode de réalisation préféré, la portion d'extrémité proximale délimite un espace inter-spires ayant une extrémité élargie.

Autrement dit, la largeur de l'espace inter-spires au niveau de l'extrémité de la spirale solidaire du boîtier est supérieure à la largeur de l'espace inter-spires dans le reste de la spirale, c'est-à-dire par exemple entre deux spires adjacentes.

Ainsi, la spirale comprend, à proximité du convergent, une zone de flexibilité accrue. Cela permet d'éviter, au cours du démoulage de l'ensemble formé de la spirale et du convergent, qu'une sortie progressive d'un noyau par dévissage crée une paroi fine et une concentration de contraintes pouvant être à l'origine de ruptures mécaniques.

Selon un mode de réalisation préféré, l'élément d'entraînement est une portion d'extrémité distale de la spirale.

Un avantage de cette caractéristique est une architecture simple, donc légère, fiable et peu coûteuse.

Selon un mode de réalisation préféré, le boîtier comprend un épaulement contre lequel est destinée à venir en appui une surface de butée de la portion d'extrémité distale.

Ainsi, un effort axial subi par la spirale ou le volet d'obturation est avantageusement transmis au boîtier par l'intermédiaire de l'épaulement. Cela améliore la robustesse du dispositif de détrompage.

Selon un mode de réalisation préféré, la portion d'extrémité distale comprend une surface latérale de centrage configurée pour venir au contact d'une paroi intérieure latérale du boîtier lorsque le pistolet de distribution de carburant d'un diamètre prédéterminé s'étend à travers l'orifice de passage.

Un avantage de cette caractéristique est un meilleur centrage du volet d'obturation en regard de l'orifice d'entrée. Cela limite la possibilité de mauvais positionnement du volet d'obturation, pouvant obliger un utilisateur à forcer avec le pistolet de distribution de carburant au risque d'user prématurément le dispositif de détrompage. Cela améliore donc la résistance du dispositif de détrompage à un grand nombre de cycles d'utilisation.

La surface latérale de centrage et la paroi intérieure latérale du boîtier, qui peuvent être sensiblement cylindriques, sont configurées pour pouvoir coopérer l'une avec l'autre avec un jeu fonctionnel le plus faible possible afin d'obtenir la meilleure coaxialité possible entre la portion d'extrémité distale de la spirale, qui porte notamment le volet d'obturation, et la portion tubulaire du boitier, qui peut comporter une fenêtre de déblocage comme cela sera décrit plus en détail ci-après.

Il importe de préciser qu'un léger jeu fonctionnel subsiste avantageusement entre la surface latérale de centrage et la paroi intérieure latérale du boitier, y compris dans une configuration limite dans laquelle la section du pistolet de distribution de carburant de diamètre prédéterminé, notamment la section du pistolet de distribution de diesel, est située au maximum de la tolérance de ses cotes de diamètre. En effet, l'absence de jeu fonctionnel pourrait bloquer l'expansion radiale de la portion d'extrémité distale de la spirale, ce qui engendrerait un blocage du pistolet dans le dispositif.

Selon un mode de réalisation préféré, la ou chaque spire comprend, sur une paroi extérieure, un pan incliné s'étendant jusqu'à un bord de cette spire.

Le fait de prévoir un pan incliné sur une paroi extérieure des spirales, et à partir des bords des spirales, permet de supprimer les fortes dépouilles liées à la géométrie de la spirale après moulage de celle-ci. Cela permet donc un démoulage plus simple et plus économique de la spirale.

Selon un mode de réalisation préféré, chaque spire comprend, sur une paroi extérieure, une ailette de renforcement, les ailettes de spires adjacentes étant alignées selon une direction axiale de la spirale.

Ces ailettes, et leur alignement dans l'axe de la spirale, permettent de renforcer la spirale, en limitant notamment le risque de flambage.

En outre, les ailettes peuvent être configurées pour venir quasiment en appui contre une paroi intérieure du boîtier quand la spirale est dilatée, ce qui permet de maintenir chaque spire centrée et d'éviter ainsi un déversement de la spirale.

Selon un mode de réalisation préféré, le dispositif comprend un convergent délimitant une ouverture de guidage destinée à guider l'insertion du pistolet de distribution de carburant d'un diamètre prédéterminé dans le dispositif, la spirale et le convergent étant une seule et même pièce.

Le fait de former le convergent et la spirale ensemble, en une seule et même pièce, offre la possibilité avantageuse de démouler la zone inter-spires de la spirale par dévissage d'un noyau central. Cela permet donc un démoulage plus simple et plus économique de la spirale.

De plus, il en résulte moins de pièces mécaniques dans le dispositif. Cela permet de supprimer la jupe s'étendant à partir du convergent pour contenir la spirale. On obtient ainsi une réduction de la masse du dispositif, et du coût d'investissement, car la fabrication du dispositif nécessite un moule en moins.

Selon un mode de réalisation préféré, les moyens de blocage comprennent un ergot de blocage et une surface de blocage délimitant une fenêtre de déblocage adaptée pour être traversée par l'ergot de blocage, l'ergot de blocage et la fenêtre de déblocage présentant un décalage angulaire positif lorsque les moyens de blocage sont en position de blocage, de sorte que l'ergot de blocage est en regard de la surface de blocage en position de blocage, l'ergot de blocage et la fenêtre de déblocage présentant un décalage angulaire nul lorsque les moyens de blocage sont en position de déblocage.

Ainsi, le déblocage du volet d'obturation n'est possible que lorsque l'ergot de blocage est en regard de la fenêtre de déblocage, c'est-à-dire pour un déplacement angulaire prédéterminé de l'ergot de blocage par rapport à la fenêtre de déblocage.

Cela permet de réaliser une bijection entre le diamètre du pistolet de distribution introduit et l'angle de rotation de l'ergot de blocage relativement à la fenêtre de déblocage entre la position de blocage et la position de déblocage : le dispositif de détrompage est sélectif, car il n'autorise l'introduction à travers l'orifice d'entrée que de pistolets de distribution de carburant ayant le diamètre prédéterminé (avec une plage de tolérance).

Selon un autre aspect, l'invention concerne aussi un véhicule, notamment un véhicule équipé d'un moteur fonctionnant au diesel, le véhicule comprenant un dispositif de détrompage ayant les caractéristiques précitées.

Ainsi, le risque d'introduire un carburant susceptible de détériorer le moteur de ce véhicule est sensiblement limité.

D'autres caractéristiques et avantages de la présente invention ressortiront clairement de la description ci-après d'un mode particulier de réalisation de l'invention, donné à titre d'exemple non limitatif, en référence aux dessins annexés dans lesquels :
- La figure 1 est une vue en perspective éclatée d'un dispositif de détrompage selon un mode de réalisation de l'invention,
- La figure 2 est une vue de côté d'un dispositif de détrompage selon un mode de réalisation de l'invention,
- La figure 3 est une vue de côté et en coupe du dispositif de détrompage selon la figure 2,
- La figure 4 est une vue de côté d'un dispositif de détrompage selon un mode de réalisation de l'invention,
- La figure 5 est La figure 3 est une vue de côté et en coupe du dispositif de détrompage selon la figure 4,
- Les figures 6 et 7 sont des vues de côté et en coupe d'un dispositif de détrompage selon un mode de réalisation de l'invention, dans lequel est introduit respectivement un pistolet de distribution d'essence et un pistolet de distribution de diesel,
- La figure 8 est une vue en perspective du dispositif selon un autre mode de réalisation,
- Les figures 9 et 10 sont des vues de côté d'une partie du dispositif selon le mode de réalisation de la figure 8.

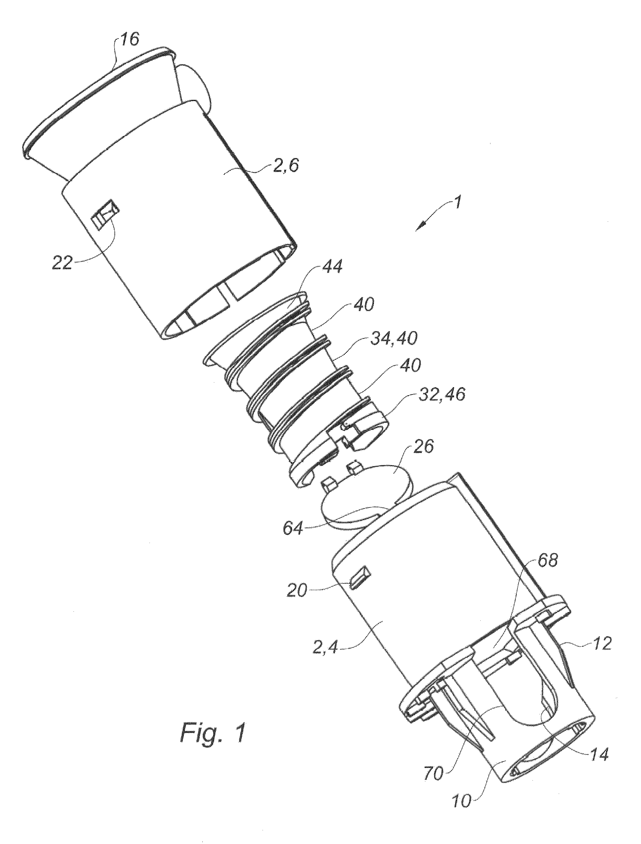

La figure 1 montre un dispositif 1 de détrompage selon un mode de réalisation de l'invention. Le dispositif 1 de détrompage est notamment destiné à empêcher l'introduction d'un pistolet de distribution d'essence dans un conduit d'arrivée de carburant d'un réservoir d'un véhicule équipé d'un moteur fonctionnant au diesel.

Le dispositif 1 de détrompage comprend un boîtier 2 destiné à être monté à une extrémité du conduit d'arrivée d'un réservoir d'un véhicule. Le boîtier 2 est par exemple formé en deux parties assemblées l'une à l'autre, à savoir une première partie 4 et une deuxième partie 6 délimitant un logement 8.

La première partie 4 peut comprendre une portion 10 tubulaire, notamment de forme cylindrique, destinée à être emboîtée dans le conduit d'arrivée de carburant. Cette portion 10 tubulaire peut comprendre à cet effet des nervures 12 axiales s'étendant en saillie depuis une paroi 28 latérale de la portion 10 tubulaire.

La portion 10 tubulaire peut par ailleurs comprendre des butées 14, par exemple en forme de nervures, faisant saillie depuis une surface intérieure de la portion 10 tubulaire pour arrêter l'insertion d'un pistolet d'un diamètre prédéterminé, notamment un pistolet de distribution de diesel.

La deuxième partie 6 peut avantageusement comprendre un convergent 16, notamment de forme tronconique, délimitant une ouverture 18 de guidage destinée à guider et permettre l'insertion du pistolet de distribution d'un diamètre prédéterminé dans le boîtier 2.

La première partie 4 et la deuxième partie 6 peuvent être fixées l'une à l'autre par des moyens de fixation, comme un crochet 20, par exemple ménagé sur la première partie 4, et une encoche 22, par exemple ménagée sur la deuxième partie 6, l'encoche 22 étant destinée à recevoir le crochet 20 pour empêcher la désolidarisation de la première et de la deuxième partie 4, 6.

Le boîtier 2, en particulier la portion 10 tubulaire, délimite un orifice 24 d'entrée adapté pour permettre l'insertion du pistolet de distribution de carburant d'un diamètre prédéterminé à l'intérieur de la portion 10 tubulaire.

Les première et deuxième parties 4, 6, la portion 10 tubulaire, le convergent 16, l'ouverture 18 de guidage, et/ou l'orifice 24 d'entrée, peuvent être sensiblement coaxiaux par rapport à un axe A longitudinal du boîtier 2, correspondant notamment à l'axe d'insertion du pistolet de distribution d'un diamètre prédéterminé dans le boîtier 2.

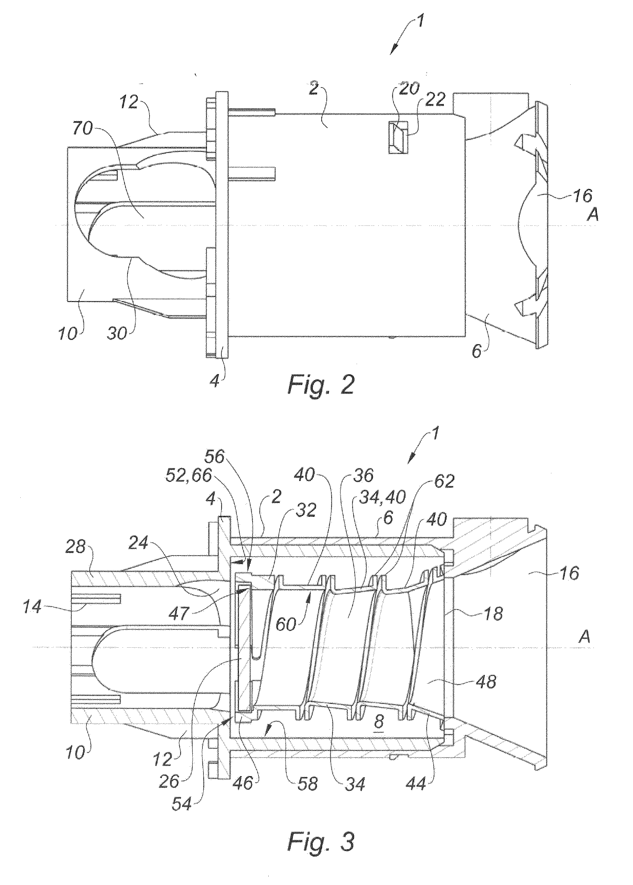

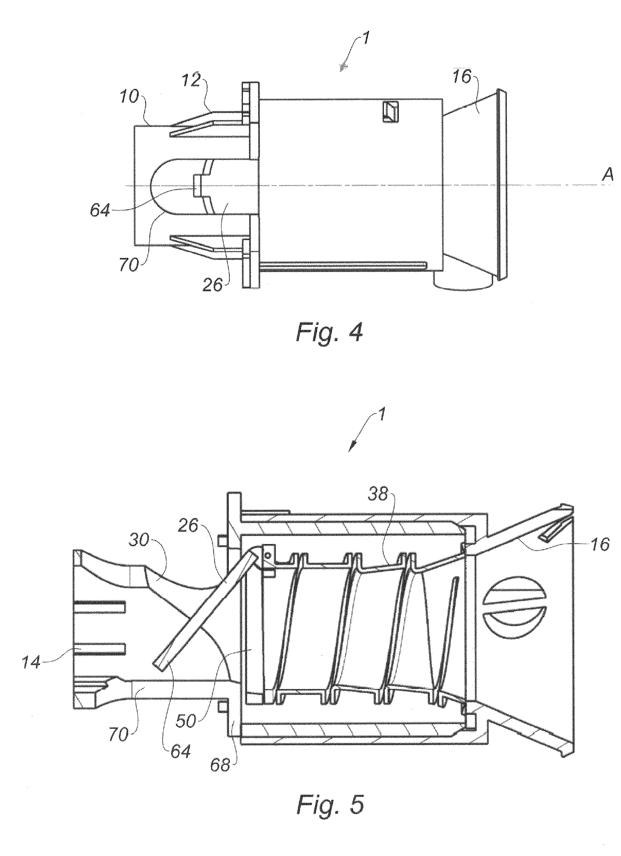

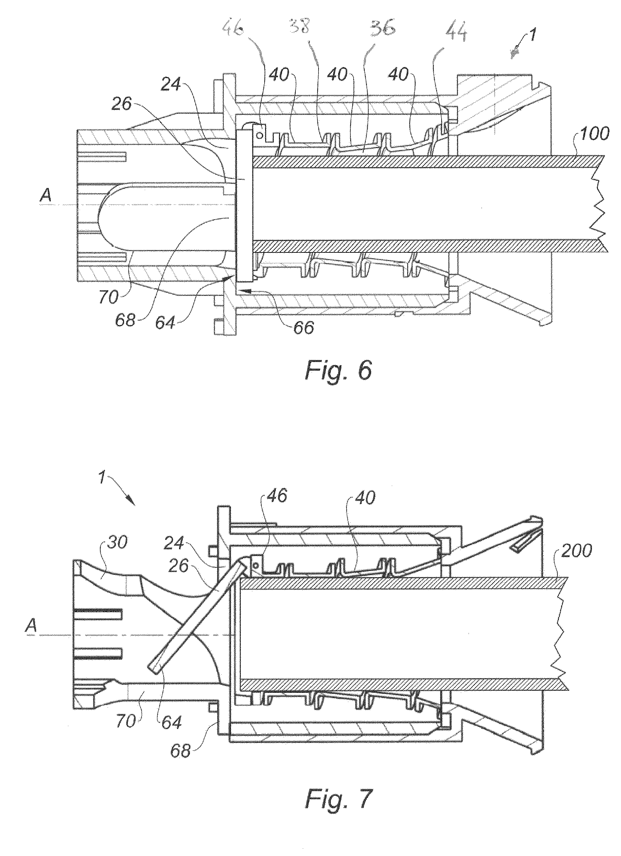

Le dispositif 1 de détrompage comprend en outre un volet 26 d'obturation, mobile entre une position d'obturation, visible par exemple sur les figures 3 et 6, dans laquelle le volet 26 d'obturation obture au moins en partie l'orifice d'entrée pour empêcher l'insertion d'un pistolet de distribution de carburant dans la portion 10 tubulaire, et une position d'ouverture, visible par exemple sur les figures 5 et 7, dans laquelle le volet 26 d'obturation libère un passage pour permettre l'insertion du pistolet de distribution de carburant d'un diamètre prédéterminé à l'intérieur de la portion 10 tubulaire.

Bien que ceci ne soit pas représenté, le dispositif 1 de détrompage peut comprendre des moyens de rappel adaptés pour rappeler le volet 26 d'obturation en position d'obturation. Les moyens de rappel comprennent par exemple un ressort.

Pour permettre le déplacement du volet 26 d'obturation vers la position d'ouverture, la paroi 28 latérale de la portion 10 tubulaire peut délimiter une ouverture 30 de passage.

Le dispositif 1 de détrompage comprend également des moyens de blocage, conçus pour bloquer le volet 26 d'obturation dans la position d'obturation. Les moyens de blocage, qui seront plus en détails ci-après, sont mobiles entre une position de blocage, dans laquelle les moyens de blocage bloquent le volet 26 d'obturation dans la position d'obturation, et une position de déblocage, dans laquelle les moyens de blocage autorisent un déplacement du volet 26 d'obturation de la position d'obturation à la position d'ouverture

Le dispositif 1 de détrompage comprend également un élément 32 d'entraînement conçu pour entraîner les moyens de blocage en position de déblocage ou de blocage. L'élément 32 étant mobile en rotation autour de l'axe A du boîtier 2.

Le dispositif 1 de détrompage comprend en outre un élément 34 élastiquement déformable, délimitant un orifice 36 de passage de section inférieure au diamètre du pistolet de distribution de carburant d'un diamètre prédéterminé, de sorte que l'insertion de ce pistolet de distribution d'un diamètre prédéterminé à travers l'orifice 36 de passage provoque une déformation radiale, notamment une expansion radiale, par rapport à l'axe A longitudinal du boîtier 2, de cet élément 34 élastiquement déformable.

Selon l'exemple illustré sur les figures 1 à 7, l'orifice 36 de passage présente un diamètre inférieur à celui d'un pistolet de distribution de diesel, classiquement de l'ordre de 25 mm, et supérieur à celui d'un pistolet de distribution d'essence, classiquement de l'ordre de 21 mm.

Plus généralement, le dispositif 1 de détrompage selon l'invention permet d'empêcher l'intrusion de tout pistolet de distribution de carburant ou toute tubulure ayant un diamètre inférieur au diamètre prédéterminé. Il permet donc par exemple d'empêcher l'introduction d'un pistolet de distribution d'essence dans un réservoir d'un véhicule diesel, ou par exemple d'empêcher l'introduction d'un pistolet de distribution d'une solution aqueuse d'urée utilisée pour un processus de réduction catalytique sélective, de diamètre de l'ordre de 19 mm, dans un réservoir d'un véhicule essence ou diesel, ou encore d'empêcher un utilisateur de remplir un réservoir d'une solution aqueuse d'urée utilisée pour un processus de réduction catalytique sélective par un fluide non homologué au moyen d'une tubulure de diamètre inférieur au diamètre de 19 mm, comme par exemple un tuyau d'arrosage.

Il est important de noter que le dispositif 1 de détrompage comprend aussi des moyens de transformation de la déformation radiale de l'élément 34 élastiquement déformable en une rotation d'un angle prédéterminé de l'élément 32 d'entraînement autour de l'axe A longitudinal du boîtier 2.

Comme illustré sur les figures 1, 3, et 5 à 10, le dispositif 1 de détrompage comprend une spirale 38, notamment une spirale hélicoïdale, élastiquement déformable.

La spirale 38 peut être logée dans le logement 8 du boîtier 2. La spirale 38 est destinée à être traversée par le pistolet de distribution de carburant d'un diamètre prédéterminé. La spirale 38 s'étend notamment de façon sensiblement parallèle à l'axe A longitudinal du boîtier 2, en l'occurrence entre l'ouverture 18 de guidage et l'orifice 24 d'entrée.

Selon un mode de réalisation préféré, illustré sur les figures 1 à 10, les moyens de transformation comprennent une spire 40 de la spirale 38.

De plus, l'élément 34 élastiquement déformable est avantageusement une spire 40 de la spirale 38.

Bien que ceci ne soit pas représenté, les moyens de transformation et l'élément 34 élastiquement déformable peuvent être une même spire 40 de la spirale 38.

La spirale 38 comprend avantageusement une pluralité de spires 40. Les spires 40 peuvent être conçues pour se déformer radialement lors de l'introduction du pistolet de distribution de carburant d'un diamètre prédéterminé à travers les spires 40 hélicoïdales.

A titre d'exemple, la spirale 38 comprend avantageusement entre trois et cinq spires 40, comme illustré notamment sur la figure 3. Cela offre un bon compromis entre la résistance à un grand nombre de cycles d'utilisation, par exemple plus de 5000 cycles d'utilisation, et la robustesse de la spirale 38.

La spirale 38 comprend une portion 44 d'extrémité proximale, qui peut être une spire 40 de la spirale 38. On notera que la portion 44 d'extrémité proximale est avantageusement solidaire du boîtier 2, notamment de la deuxième partie 6. La portion 44 d'extrémité proximale peut être fixée à l'arrière du convergent 16, par exemple par encastrement, clippage, soudure, ou collage. Cela évite un débattement libre de la spirale 38 à l'intérieur du boîtier 2.

Comme illustré sur les figures, la spirale 38 comprend une portion 46 d'extrémité distale, qui peut être une spire 40 de la spirale 38. L'élément 32 d'entraînement et la portion 46 d'extrémité distale de la spirale 38 se confondent avantageusement. La portion 46 d'extrémité distale est notamment reliée à la portion 44 d'extrémité proximale par l'intermédiaire d'une ou plusieurs spires 40 hélicoïdales de la spirale 38.

Les portions 44, 46 d'extrémité proximale et distale délimitent chacune une ouverture 48, 50 conformée pour laisser passer le pistolet de distribution de carburant d'un diamètre prédéterminé. Ces ouvertures 48, 50 peuvent être sensiblement coaxiales entre elles et/ou avec l'ouverture 18 de guidage et le cas échéant l'orifice 24 d'entrée.

Selon l'exemple de réalisation des figures 1 à 10, la portion 46 d'extrémité distale supporte le volet 26 d'obturation. En particulier, le volet 26 d'obturation est monté mobile en rotation par rapport à la portion 46 d'extrémité distale, notamment autour d'un axe sensiblement perpendiculaire à l'axe A longitudinal du boîtier 2.

Le boîtier 2 comprend par ailleurs un épaulement 52 contre lequel est destinée à venir en appui une surface 54 de butée de la portion 46 d'extrémité distale, si bien que les efforts axiaux subis par la spirale 38 ou le volet 26 d'obturation sont transmis au boîtier 2. Cela permet au volet 26 d'obturation de rester bloqué en position d'obturation même si une force importante, par exemple de l'ordre de 300 Newtons à 500 Newtons, est exercée sur le volet 26 d'obturation en direction du conduit d'arrivée de carburant du réservoir.

Le cas échéant, la surface 54 de butée peut être une face du volet 26 d'obturation. Cependant, cette solution n'est pas privilégiée en raison des frottements qu'elle induit.

De préférence, le volet 26 d'obturation, qui peut être solidaire en rotation de la portion 46 d'extrémité distale, est maintenu plaqué sur une face 47 intérieure d'appui de cette portion 46 d'extrémité distale, par exemple par les moyens de rappel, de sorte qu'une face du volet 26 d'obturation ne soit pas en contact avec l'épaulement 52 lors de l'introduction d'un pistolet de distribution de carburant dans la spirale 38. En d'autres termes, la surface 54 de butée n'est pas une face du volet 26 d'obturation.

De cette manière, lors de l'introduction d'un pistolet de distribution de carburant d'un diamètre prédéterminé dans la spirale 38, les efforts axiaux transmis par les spires 40 ne sont pas supportés par le volet 26 d'obturation.

La surface 54 de butée peut par ailleurs être conçue pour glisser contre l'épaulement 52 du boitier 2 ; elle peut notamment présenter une géométrie et/ou un état de surface adaptés pour réduire les frottements et l'usure.

Dans certains cas particuliers, la surface 54 de butée peut être une face externe d'un ergot 64 de blocage solidaire du volet 26 d'obturation, comme cela est visible sur les figures 6 et 7. Ainsi, lorsqu'un pistolet de distribution de carburant de diamètre sensiblement inférieur à celui du pistolet de distribution de carburant d'un diamètre prédéterminé arrive en butée contre le volet 26 d'obturation mobile, l'ergot 64 de blocage vient en appui contre l'épaulement 52.

De manière avantageuse, la portion 46 d'extrémité distale comprend une surface 56 latérale de centrage configurée pour venir au contact d'une paroi 58 intérieure latérale du boîtier 2 lorsque le pistolet de distribution d'un diamètre prédéterminé s'étend à travers la spirale 38.

On rappelle qu'un léger jeu fonctionnel subsiste avantageusement entre la surface 56 latérale de centrage et la paroi 58 intérieure latérale, y compris dans la configuration limite où la section du pistolet de distribution de carburant d'un diamètre prédéterminé, notamment un pistolet de distribution de diesel, est située au maximum de la tolérance de ses cotes de diamètre. Cela garantit un déplacement sans heurts du volet 26 d'obturation de la position d'obturation à la position d'ouverture.

La géométrie de la spirale 38 peut être conçue pour permettre à l'ensemble des spires 40 de coopérer de manière à former un tube, notamment un tube sensiblement cylindrique, ce tube étant sensiblement coaxial avec le convergent 16 d'entrée, avec la portion 46 d'extrémité distale et avec la portion 10 tubulaire.

A cet effet, chaque spire 40 de la spirale 38 peut avantageusement comprendre une paroi 60 latérale délimitant un conduit sensiblement tubulaire.

Pour faciliter l'expansion radiale des spires 40, et pour réduire le risque de blocage du pistolet de distribution de carburant d'un diamètre prédéterminé entre deux spires 40 consécutives, la paroi 60 latérale d'une ou plusieurs des spires 40, notamment de chaque spire 40, peut présenter un profil intérieur convergent, notamment en direction du volet 26 d'obturation.

De cette manière, la progression du pistolet de distribution de carburant d'un diamètre prédéterminé, notamment d'un pistolet diesel, le long des spires 40 autorise l'expansion progressive et maitrisée de ces spires 40, en limitant le frottement, l'usure, et la discontinuité de l'effort lié au passage d'une spire 40 ayant subi son expansion à une spire 40 non encore dilatée.

Le profil convergent peut être sensiblement conique. Le profil 60 convergent peut être avantageusement doté de congés et/ou arrondis. Il peut par ailleurs présenter un état de surface et/ou un matériau adaptés pour rendre l'introduction du pistolet de distribution de carburant d'un diamètre prédéterminé la plus fluide possible pour l'utilisateur, en générant un frottement et une usure très réduits au cours des cycles de remplissage en carburant.

Cela permet un guidage amélioré du pistolet de distribution de carburant dans la spirale 38, si bien que l'extrémité du pistolet de distribution de carburant ne se coince pas entre deux spires 40 adjacentes, ce qui risquerait de détériorer la spirale 38.

Comme illustré sur les figures 3 et 5 à 7, chaque spire 40 peut avantageusement comprendre une portée 62 axiale, par exemple en forme de nervure hélicoïdale, destinée à venir en appui contre une portée 62 axiale d'une spire 40 adjacente de la spirale 38 ou le cas échéant contre une portée 62 axiale de la portion 46 d'extrémité distale. Cela confère à la spirale 38 une robustesse améliorée, du fait de la transmission d'un effort axial subi par la spirale 38 de spire en spire et le cas échéant jusqu'à l'épaulement 52.

On notera que la spirale 38 peut être montée précontrainte à l'intérieur du boîtier 2. Le cas échéant, la portion 46 d'extrémité distale est en liaison appui-plan avec l'épaulement 52 du boîtier 2. Cela est avantageux en combinaison avec des spires 40 comprenant la paroi 60 latérale délimitant un conduit sensiblement tubulaire ou légèrement convergent, car la spirale 38 forme ainsi une structure sensiblement cylindrique particulièrement robuste. Alternativement il peut exister un léger jeu fonctionnel entre la portion 46 d'extrémité distale et l'épaulement 52, qui tend à disparaitre lors de l'introduction d'un pistolet de distribution de carburant d'un diamètre prédéterminé sous l'effet des efforts axiaux.

Afin de permettre un déblocage sélectif du volet 26 d'obturation, c'est-à-dire un déblocage obtenu uniquement pour un pistolet de distribution de carburant d'un diamètre prédéterminé avec une plage de tolérance prédéterminée, les moyens de blocage comprennent avantageusement un ergot 64 de blocage et une surface 66 de blocage délimitant une fenêtre 68 de déblocage adaptée pour être traversée par l'ergot 64 de blocage, comme cela est visible notamment sur les figures 6 et 7.

En position de blocage, l'ergot 64 de blocage est destiné à être en regard de la surface 66 de blocage, avec un décalage angulaire positif par rapport à la fenêtre 68 de déblocage autour de l'axe A longitudinal du boîtier 2. Ce décalage angulaire peut être, à titre d'exemple non limitatif, de l'ordre de 45° à 90°, et plus précisément de l'ordre de 60° à 90°. En position de déblocage, ce décalage angulaire est nul, si bien que l'ergot 64 peut être déplacé à travers la fenêtre 68 de déblocage.

On notera que l'ergot 64 de blocage, ou le cas échéant la fenêtre 68 de déblocage, est solidaire de la portion 46 d'extrémité distale en rotation autour de l'axe A longitudinal du boîtier 2, et plus précisément du volet 26 d'obturation embarqué sur la portion 46 d'extrémité distale.

Selon l'exemple de réalisation des figures 1 à 10, l'ergot 64 de blocage est solidaire du volet 26 d'obturation, dont il est une excroissance, et la surface 66 de blocage est délimitée par un épaulement du boîtier 2, par exemple l'épaulement 52 contre lequel la portion 46 d'extrémité distale est destinée à venir en appui. La fenêtre 68 de déblocage est formée en partie par une ouverture 70 ménagée à travers la paroi 28 latérale de la portion 10 tubulaire.

Le cas échéant, la surface 54 de butée peut être une face de l'ergot 64 de blocage.

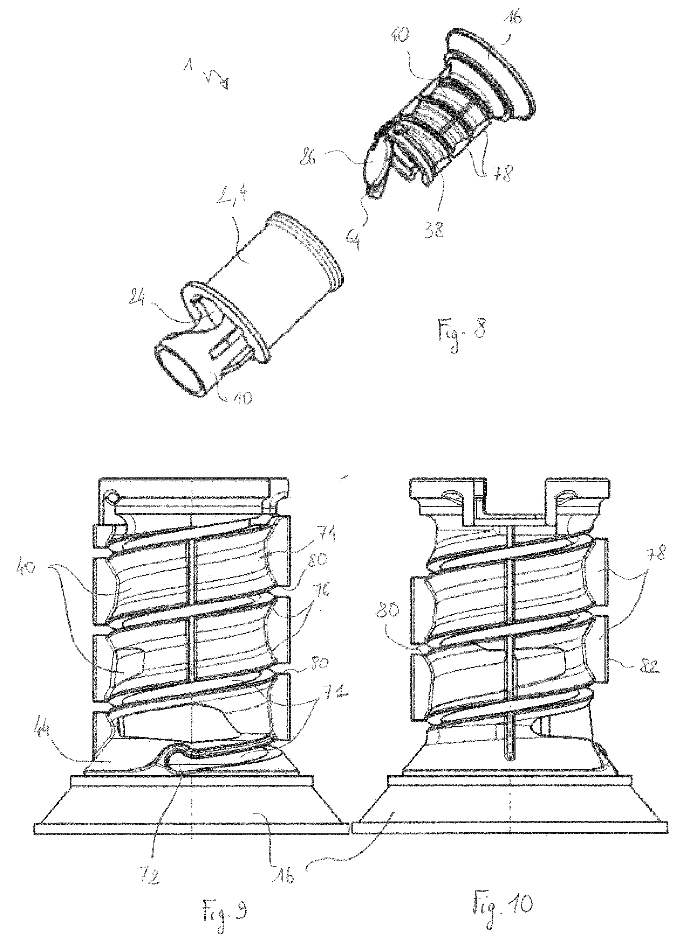

Les figures 8 à 10 montrent un dispositif 1 de détrompage selon un autre mode de réalisation de l'invention. Les mêmes références numériques s'appliquent pour les éléments communs.

Le dispositif 1 de détrompage selon les figures 8 à 10 diffère de celui des figures 1 à 7 en ce que le convergent 16 et la spirale 18 sont une seule et même pièce.

Le convergent 16 et la spirale 18 sont donc formés ensemble, par exemple par moulage.

Cela permet de démouler la zone 71 inter-spires par dévissage d'un noyau, simplifiant ainsi l'opération de démoulage de la spirale 38.

Comme indiqué précédemment, le convergent 16 délimite l'ouverture 18 de guidage destinée à guider l'insertion du pistolet de distribution de carburant d'un diamètre prédéterminé dans le dispositif 1, et plus précisément à l'intérieur de la spirale 38.

Aussi, le dispositif 1 peut être exempt d'une jupe ou deuxième partie 6 s'étendant à partir du convergent 16. Cela allège le dispositif 1 et limite les investissements, puisqu'un moule en moins est utilisé.

Par ailleurs, comme illustré sur la figure 9, la portion 44 d'extrémité proximale de la spirale 38, c'est-à-dire l'extrémité de la spirale 38 liée au convergent 16, délimite un espace 71 inter-spires ayant une extrémité 72 élargie. Cette extrémité 72 est par exemple en « goutte » d'eau, pouvant donc avoir un contour sensiblement circulaire de diamètre supérieur à la largeur de la zone 71 inter-spires.

Cette extrémité 72 élargie, ou goutte, crée une zone de flexibilité accrue permettant d'éviter, au cours du démoulage de la pièce formée par la spirale et le convergent, que la sortie progressive du noyau par dévissage crée une paroi fine et une concentration de contraintes pouvant être à l'origine de ruptures mécaniques.

Le dispositif 1 de détrompage selon les figures 8 à 10 diffère aussi de celui des figures 1 à 7 en ce qu'au lieu d'une portée 62 axiale en forme de nervure hélicoïdale, les spires 40 comprennent, sur une paroi 74 extérieure, un pan 76 incliné s'étendant sensiblement entre le centre et un bord de chaque spire 40. Ce pan 76 incliné va en s'élargissant en direction de l'espace 71 inter-spires. Les pans 76 sont inclinés par rapport à une direction axiale correspondant à la direction dans laquelle s'étend la spirale 38. Les pans 76 sont par exemple inclinés d'un angle compris entre 20° et 50° par rapport à ladite direction axiale.

Toujours selon l'exemple des figures 8 à 10, les spires 40 peuvent comprendre, sur leur paroi 74 extérieure, une ou plusieurs ailettes 78 de renforcement. Ces ailettes 78 s'étendent par exemple de façon sensiblement perpendiculaire à la paroi 74 extérieure.

Les ailettes 78 de spires 40 adjacentes sont avantageusement alignées selon une direction axiale de la spirale 38.

Elles peuvent s'étendre sur toute la largeur des spires 40 les supportant.

Les ailettes 78 de renforcement s'étendent dans un plan parallèle à l'axe de la spirale 38. Les ailettes 78 de chaque groupe d'ailettes 78 ainsi alignées peuvent donc être sensiblement coplanaires.

Comme visible sur les figures 9 et 10, les ailettes 78 comprennent au moins une tranche 80 radiale, en regard de la tranche 80 radiale d'une ailette 78 d'une spire 40 adjacente. Ainsi, lors d'une compression des spires 40 pouvant être due à l'introduction d'un pistolet de distribution de carburant dans la spirale 38, les tranches 80 radiales peuvent venir en appui les unes contre les autres, ce qui évite un flambage de la spirale 38.

De ce fait, les ailettes 78 de renforcement sont particulièrement avantageuses quand les spires 40 comprennent des pans 76 inclinés au lieu de portées 62, car l'appui des spires 40 adjacentes est assuré par une surface plus réduite, pouvant donc provoquer un flambage de la spirale 38.

Les ailettes 78 peuvent aussi comprendre une tranche 82 axiale configurée pour venir en appui ou pour être situé à proximité immédiate, c'est-à-dire avec un jeu restreint, de la paroi 58 intérieure du boîtier 2 quand la spirale 38 est dilatée, comme cela est le cas quand un pistolet de distribution de carburant du diamètre prédéterminé y est introduit. Cela contribue à maintenir chaque spire 40 centrée.

L'invention concerne aussi un véhicule comprenant le dispositif 1 de détrompage ayant les caractéristiques précitées, notamment un véhicule automobile pouvant être équipé d'un moteur fonctionnant au diesel.

Le fonctionnement du dispositif 1 de détrompage est décrit ci-après, en référence aux figures 6 et 7.

L'introduction d'un pistolet 100 de distribution d'essence, de diamètre inférieur à celui de l'orifice 36 de passage, ne provoque aucune expansion radiale de la spire 40 hélicoïdale. La spirale 38 ne se déforme donc pas; sa portion 46 d'extrémité distale reste sensiblement en place, si bien que l'ergot 64 de blocage demeure en appui contre la surface 66 de blocage. Le volet 26 d'obturation est donc bloqué en position d'obturation et empêche le pistolet 100 de distribution d'essence de traverser l'orifice 24 d'entrée pour accéder au conduit d'arrivée de carburant du réservoir du véhicule.

L'introduction d'un pistolet 200 de distribution de diesel provoque en revanche une expansion radiale d'au moins la spire 40 de la spirale 38. Cette expansion radiale est transformée par la spirale 38 en une rotation de sa portion 46 d'extrémité distale autour de l'axe A longitudinal du boîtier 2. L'ergot 64 de blocage, solidaire en rotation de la portion 46 d'extrémité distale, se déplace avec la portion 46 d'extrémité distale. L'écart angulaire entre l'ergot 64 de blocage et la fenêtre 68 de déblocage se réduit ainsi, jusqu'à ce que l'ergot 64 de blocage soit en regard de la fenêtre 68 de déblocage. En poussant sur le volet 26 d'obturation avec le pistolet 200 de distribution de diesel, l'utilisateur déplace le volet 26 d'obturation en position d'ouverture, ce qui permet au pistolet 200 de distribution de diesel de traverser l'orifice 24 d'entrée pour accéder au conduit d'arrivée de carburant du réservoir.

Bien entendu, l'invention n'est nullement limitée au mode de réalisation décrit ci-dessus, ce mode de réalisation n'ayant été donné qu'à titre d'exemple. Des modifications sont possibles, notamment du point de vue de la constitution des divers éléments, ou par la substitution d'équivalents techniques, sans sortir pour autant du domaine de protection de l'invention.

Ainsi, le volet 26 d'obturation pourrait être monté mobile en rotation sur le boîtier 2, tandis que l'ergot 64 de blocage est solidaire de la portion 46 d'extrémité distale et la surface 66 de blocage et la fenêtre 68 de déblocage sont supportées par le volet 26 d'obturation. Alternativement, le volet 26 d'obturation pourrait être monté mobile en rotation sur le boîtier 2, tandis que l'ergot 64 de blocage est solidaire du volet 26 d'obturation et la surface 66 de blocage et la fenêtre 68 de déblocage sont supportées par la portion 46 d'extrémité distale.

## Revendications

1. Dispositif (1) de détrompage pour conduit d'arrivée de carburant d'un réservoir d'un véhicule, comprenant
un boîtier (2) délimitant un orifice (24) d'entrée destiné à recevoir un pistolet de distribution de carburant d'un diamètre prédéterminé,
un volet (26) d'obturation, mobile entre une position d'obturation dans laquelle le volet (26) d'obturation obture au moins en partie l'orifice (24) d'entrée et une position d'ouverture dans laquelle le volet (26) d'obturation libère un passage à travers l'orifice (24) d'entrée pour y permettre l'insertion du pistolet de distribution de carburant d'un diamètre prédéterminé,
des moyens de blocage, mobiles entre une position de blocage dans laquelle les moyens de blocage bloquent le volet (26) d'obturation dans la position d'obturation et une position de déblocage dans laquelle les moyens de blocage autorisent un déplacement du volet (26) d'obturation de la position d'obturation à la position d'ouverture,
un élément (32) d'entraînement, mobile en rotation autour d'un axe (A) longitudinal du boîtier (2), ledit élément (32) d'entraînement étant conçu pour entraîner les moyens de blocage en position de déblocage ou de blocage,
un élément (34) élastiquement déformable, et
des moyens de transformation d'une déformation radiale de l'élément (34) élastiquement déformable en une rotation d'un angle prédéterminé de l'élément (32) d'entraînement autour de l'axe (A) longitudinal du boîtier (2),
**caractérisé en ce que** l'élément (34) élastiquement déformable délimite un orifice (36) de passage de section inférieure au diamètre du pistolet de distribution de carburant d'un diamètre prédéterminé, de sorte que l'insertion dudit pistolet de distribution de carburant d'un diamètre prédéterminé à travers l'orifice (36) de passage provoque une déformation radiale de l'élément (34) élastiquement déformable.

2. Dispositif (1) de détrompage selon la revendication 1, dans lequel le dispositif (1) de détrompage comprend une spirale (38) élastiquement déformable et les moyens de transformation comprennent au moins une spire (40) de la spirale (38).

3. Dispositif (1) de détrompage selon la revendication 2, dans lequel la spirale (38) comprend une pluralité de spires (40).

4. Dispositif (1) de détrompage selon la revendication 2 ou 3, dans lequel l'élément (34) élastiquement déformable est une spire (40) de la spirale (38).

5. Dispositif (1) de détrompage selon l'une des revendications 2 à 4, dans lequel la spirale (38) comprend une portion (44) d'extrémité proximale solidaire du boîtier (2).

6. Dispositif de détrompage selon la revendication 5, dans lequel la portion (44) d'extrémité proximale délimite un espace (71) inter-spires ayant une extrémité (72) élargie.

7. Dispositif (1) de détrompage selon l'une des revendications 2 à 6, dans lequel l'élément (32) d'entraînement est une portion (46) d'extrémité distale de la spirale (38).

8. Dispositif (1) de détrompage selon la revendication 7, dans lequel le boîtier (2) comprend un épaulement (52) contre lequel est destinée à venir en appui une surface (54) de butée de la portion (46) d'extrémité distale.

9. Dispositif (1) de détrompage selon la revendication 7 ou 8, dans lequel la portion (46) d'extrémité distale comprend une surface (56) latérale de centrage configurée pour venir au contact d'une paroi (58) intérieure latérale du boîtier (2) lorsque le pistolet de distribution de carburant d'un diamètre prédéterminé s'étend à travers l'orifice (36) de passage.

10. Dispositif de détrompage selon l'une des revendications 2 à 9, dans lequel la ou chaque spire (40) comprend, sur une paroi (74) extérieure, un pan (76) incliné s'étendant jusqu'à un bord de cette spire (40).

11. Dispositif de détrompage selon l'une des revendications 2 à 10, dans lequel chaque spire (40) comprend, sur une paroi (74) extérieure, une ailette (78) de renforcement, les ailettes (78) de spires (40) adjacentes étant alignées selon une direction axiale de la spirale (38).

12. Dispositif de détrompage selon l'une des revendications 2 à 11, dans lequel le dispositif (1) comprend un convergent (16) délimitant une ouverture (18) de guidage destinée à guider l'insertion du pistolet de distribution de carburant d'un diamètre prédéterminé dans le dispositif (1), la spirale (38) et le convergent (16) étant une seule et même pièce.

13. Dispositif (1) de détrompage selon l'une des revendications 1 à 12, dans lequel les moyens de blocage comprennent un ergot (64) de blocage et une surface (66) de blocage délimitant une fenêtre (68) de déblocage adaptée pour être traversée par l'ergot (64) de blocage, l'ergot (64) de blocage et la fenêtre (68) de déblocage présentant un décalage angulaire positif lorsque les moyens de blocage sont en position de blocage, de sorte que l'ergot (64) de blocage est en regard de la surface (66) de blocage en position de blocage, l'ergot (64) de blocage et la fenêtre (68) de déblocage présentant un décalage angulaire nul lorsque les moyens de blocage sont en position de déblocage.

14. Véhicule, notamment véhicule équipé d'un moteur fonctionnant au diesel, le véhicule comprenant un dispositif (1) de détrompage selon l'une des revendications 1 à 13.

## Patentansprüche

1. Unverwechselbarkeitsvorrichtung (1) für Kraftstoffzuführleitung eines Tanks eines Fahrzeugs, die Folgendes umfasst
ein Gehäuse (2), das eine Eingangsöffnung (24) abgrenzt, die dazu bestimmt ist, eine Kraftstoffabgabepistole mit einem vorbestimmten Durchmesser aufzunehmen,
eine Verschlussklappe (26), die zwischen einer Verschlussposition, in der die Verschlussklappe (26) die Eingangsöffnung (24) mindestens teilweise verschließt, und einer Öffnungsposition, in der die Verschlussklappe (26) eine Passage durch die Eingangsöffnung (24) freigibt, um dort das Einfügen der Kraftstoffabgabepistole mit einem vorbestimmten Durchmesser zu erlauben, beweglich ist,
Blockierungsmittel, die zwischen einer Blockierungsposition, in der die Blockierungsmittel die Verschlussklappe (26) in der Verschlussposition blockieren, und einer Löseposition, in der die Blockierungsmittel eine Bewegung der Verschlussklappe (26) von der Verschlussposition zu der Öffnungsposition erlauben, beweglich sind,
ein Antriebselement (32), das um eine Längsachse (A) des Gehäuses (2) in Drehung beweglich ist, wobei das Antriebselement (32), konzipiert ist, um die Blockierungsmittel in Löseposition oder Blockierungsposition anzutreiben,
ein elastisch verformbares Element (34) und
Mittel zum Umwandeln einer radialen Verformung des elastisch verformbaren Elements (34) in eine Drehung um einen vorbestimmten Winkel des Antriebselements (32) um die Längsachse (A) des Gehäuses (2),
**dadurch gekennzeichnet, dass** das elastisch verformbare Element (34) eine Durchgangsöffnung (36) mit Innenquerschnitt kleiner als der Durchmesser der Kraftstoffabgabepistole mit einem vorbestimmten Durchmesser abgrenzt, so dass das Einfügen der Kraftstoffabgabepistole mit einem vorbestimmten Durchmesser durch die Durchgangsöffnung (36) eine radiale Verformung des elastisch verformbaren Elements (34) bewirkt.

2. Unverwechselbarkeitsvorrichtung (1) nach Anspruch 1, wobei die Unverwechselbarkeitsvorrichtung (1) eine elastisch verformbare Spirale (38) und Umformmittel, die mindestens eine Windung (40) der Spirale (38) umfassen, umfasst.

3. Unverwechselbarkeitsvorrichtung (1) nach Anspruch 2, wobei die Spirale (38) eine Mehrzahl von Windungen (40) umfasst.

4. Unverwechselbarkeitsvorrichtung (1) nach Anspruch 2 oder 3, wobei das elastisch verformbare Element (34) eine Windung (40) der Spirale (38) ist.

5. Unverwechselbarkeitsvorrichtung (1) nach einem der Ansprüche 2 bis 4, wobei die Spirale (38) einen proximalen Endabschnitt (44), der fest mit dem Gehäuse (2) verbunden ist, umfasst.

6. Unverwechselbarkeitsvorrichtung (1) nach Anspruch 5, wobei der proximale Endabschnitt (44) einen Raum (71) zwischen Windungen abgrenzt, der ein erweitertes Ende (72) hat.

7. Unverwechselbarkeitsvorrichtung (1) nach einem der Ansprüche 2 bis 6, wobei das Antriebselement (32) ein distaler Endabschnitt (46) der Spirale (38) ist.

8. Unverwechselbarkeitsvorrichtung (1) nach Anspruch 7, wobei das Gehäuse (2) einen Ansatz (52) umfasst, gegen welchen eine Anschlagoberfläche (54) des distalen Endabschnitts (46) zum Aufliegen kommen soll.

9. Unverwechselbarkeitsvorrichtung (1) nach Anspruch 7 oder 8, wobei der distale Endabschnitt (46) eine Zentrierungsseitenoberfläche (56) umfasst, die konfiguriert ist, um mit einer Innenseitenwand (58) des Gehäuses (2) in Berührung zu kommen, wenn sich die Kraftstoffabgabepistole mit einem vorbestimmten Durchmesser durch die Durchgangsöffnung (36) erstreckt.

10. Unverwechselbarkeitsvorrichtung (1) nach einem der Ansprüche 2 bis 9, wobei die oder jede Windung (40) auf einer Außenwand (74) eine schräge Bahn (76) umfasst, die sich bis zu einem Rand dieser Windung (40) erstreckt.

11. Unverwechselbarkeitsvorrichtung nach einem der Ansprüche 2 bis 10, wobei jede Windung (40) auf einer Außenwand (74) eine Verstärkungsrippe (78) umfasst, wobei die Rippen (78) benachbarter Windungen (40) entlang einer axialen Richtung der Spirale (38) ausgerichtet sind.

12. Unverwechselbarkeitsvorrichtung nach einem der Ansprüche 2 bis 11, wobei die Vorrichtung (1) einen Einlauf (16) umfasst, der eine Führungsöffnung (18) abgrenzt, die dazu bestimmt ist, das Einfügen der Kraftstoffabgabepistole mit einem vorbestimmten Durchmesser in die Vorrichtung (1) zu führen, wobei die Spirale (38) und der Einlauf (16) aus ein und demselben Teil bestehen.

13. Unverwechselbarkeitsvorrichtung nach einem der Ansprüche 1 bis 12, wobei die Blockierungsmittel einen Blockierungsdorn (64) und eine Blockierungsoberfläche (66) umfassen, die ein Lösefenster (68) abgrenzt, das angepasst ist, um von dem Blockierungsdorn (64) durchquert zu werden, wobei der Blockierungsdorn (64) und das Lösefenster (68) einen positiven Winkelversatz aufweisen, wenn die Blockierungsmittel in Blockierungsposition sind, so dass der Blockierungsdorn (64) gegenüber der Blockierungsoberfläche (66) in Blockierungsposition liegt, wobei der Blockierungsdorn (64) und das Lösefenster (68) einen Winkelversatz gleich null umfassen, wenn die Blockierungsmittel in Löseposition sind.

14. Fahrzeug, insbesondere Fahrzeug, das mit einem Motor ausgestattet ist, der mit Dieselkraftstoff funktioniert, wobei das Fahrzeug eine Unverwechselbarkeitsvorrichtung (1) nach einem der Ansprüche 1 bis 13 umfasst.

## Claims

1. A foolproof device (1) for a fuel supply conduit of a tank of a vehicle, comprising
a casing (2) delimiting an inlet orifice (24) intended to receive a fuel dispensing nozzle with a predetermined diameter,
a shut-off flap (26), movable between a shut-off position in which the shut-off flap (26) obstructs the inlet orifice (24) at least partially and an open position in which the shut-off flap (26) frees a passage through the inlet orifice (24) so as to enable the insertion therein of the fuel dispensing nozzle with a predetermined diameter,
blocking means, movable between a blocking position in which the blocking means block the shut-off flap (26) in the shut-off position and a release position in which the blocking means enable a displacement of the shut-off flap (26) from the shut-off position to the open position,
a drive element (32), movable in rotation about a longitudinal axis (A) of the casing (2), said drive element (32) being designed so as to drive the blocking means into the release or blocking position,
an elastically deformable element (34), and
means for transforming a radial deformation of the elastically deformable element (34) into a rotation over a predetermined angle of the drive element (32) about the longitudinal axis (A) of the casing (2),
**characterized in that** the elastically deformable element (34) delimits a passage orifice (36) having a section smaller than the diameter of the fuel dispensing nozzle with a predetermined diameter, so that the insertion of said fuel dispensing nozzle with a predetermined diameter through the passage orifice (36) causes a radial deformation of the elastically deformable element (34).

2. The foolproof device (1) according to claim 1, wherein the foolproof device (1) comprises an elastically deformable spiral (38) and the transformation means comprise at least one turn (40) of the spiral (38).

3. The foolproof device (1) according to claim 2, wherein the spiral (38) comprises a plurality of turns (40).

4. The foolproof device (1) according to claim 2 or 3, wherein the elastically deformable element (34) is a turn (40) of the spiral (38).

5. The foolproof device (1) according to any of claims 2 to 4, wherein the spiral (38) comprises a proximal end portion (44) secured to the casing (2).

6. The foolproof device (1) according to claim 5, wherein the proximal end portion (44) delimits an inter-turn space (71) having an enlarged end (72).

7. The foolproof device (1) according to any of claims 2 to 6, wherein the drive element (32) is a distal end portion (46) of the spiral (38).

8. The foolproof device (1) according to claim 7, wherein the casing (2) comprises a shoulder (52) against which an abutment surface (54) of the distal end portion (46) is intended to bear.

9. The foolproof device (1) according to claim 7 or 8, wherein the distal end portion (46) comprises a lateral centering surface (56) configured to come into contact with a lateral lower wall (58) of the casing (2) when the fuel dispensing nozzle with a predetermined diameter extends through the passage orifice (36).

10. The foolproof device (1) according to any of claims 2 to 9, wherein the or each turn (40) comprises, on an external wall (74), an inclined side (76) extending up to an edge of this turn (40).

11. The foolproof device (1) according to any of claims 2 to 10, wherein each turn (40) comprises, on an external wall (74), a reinforcing fin (78), the fins (78) of adjacent turns (40) being aligned along an axial direction of the spiral (38).

12. The foolproof device (1) according to any of claims 2 to 11, wherein the device (1) comprises a convergent nozzle (16) delimiting a guide opening (18) intended to guide the insertion of the fuel dispensing nozzle with a predetermined diameter in the device (1), the spiral (38) and the convergent nozzle (16) being integral with each other.

13. The foolproof device (1) according to any of claims 1 to 12, wherein the blocking means comprise a blocking lug (64) and a blocking surface (66) delimiting a release aperture (68) adapted to be crossed by the blocking lug (64), the blocking lug (64) and the release aperture (68) present a positive angular offset when the blocking means are in the blocking position, so that the blocking lug (64) is opposite the blocking surface (66) in the blocking position, the blocking lug (64) and the release slot (68) present a zero-angle offset when the blocking means are in the release position.

14. A vehicle, in particular a vehicle equipped with a diesel-operated engine, the vehicle comprising a foolproof device (1) according to any of claims 1 to 13.
